# EUROPEAN PATENT SPECIFICATION

(11) **EP 1 876 512 B1**
(45) Date of publication and mention of the grant of the patent: **30.03.2011**
(21) Application number: 07111683.4
(22) Date of filing: 03.07.2007
(51) Int. Cl.: G06F 1/32, H04L 12/12

(54) **Network control apparatus and method for enabling network chip**
Netzwerksteuervorrichtung und Verfahren zum aktivieren eines Netzwerk-Bauelements
Dispositif de commande de réseau et procédé pour activee une puce de réseau

(30) Priority: 07.07.2006 CN 200610103044
(43) Date of publication of application: 09.01.2008
(73) Proprietor: ASUSTeK Computer Inc., Peitou,Taipei (TW)
(72) Inventor: Lin, Cyuan-Tai, Taipei (TW); Chu, Ching-Wen, Taipei (TW); Hsiao, Yi-Hsin, Taipei (TW)
(74) Representative: Lang, Christian

(56) References cited:
- EP-A2- 0 573 204
- US-A- 6 055 641
- US-B1- 6 993 667

## Description

### BACKGROUND OF THE INVENTION

### Field of the Invention

The invention relates in general to a network control apparatus, and more particularly to a network control apparatus with a power-saving effect.

### Description of the Related Art

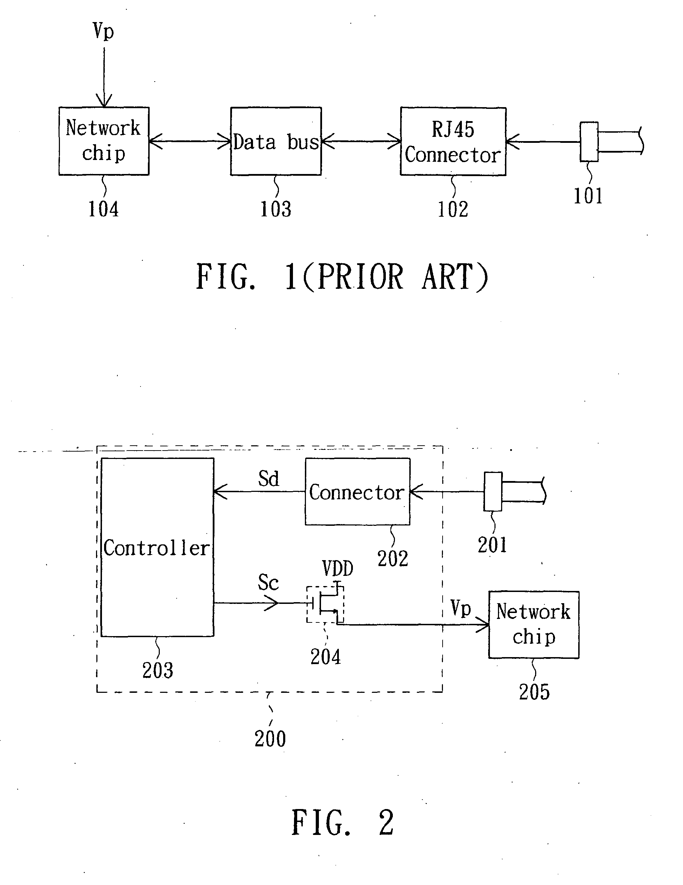

FIG. 1 (Prior Art) is a block diagram showing a conventional network system. As shown in FIG. 1, a network cable 101 is connected to an RJ45 connector 102. A data bus 103 is disposed between the RJ45 connector 102 and a network chip 104. Network data is transmitted from the network chip 104 to the connector 102 through the data bus 103, and then transmitted to the outside through the network cable 101. Alternatively, the network data is transmitted from the outside to the connector 102 through the network cable 101, and then transmitted to the network chip 104 through the data bus 103. The network chip 104 always receives a power voltage Vp no matter whether the network cable 101 is connected to the RJ45 connector 102 or not.

Thus, when the network cable 101 is not connected to the RJ45 connector 102, i.e. when the network is not used, the network chip 104 still continuously consumes the power When the network system is used in a portable electronic device, such as a notebook computer, the too-large power consumption of the network chip 104 shortens the durability of the battery in the electronic device.

US 6,055,641 describes a computer interface architecture having a power saving function. This architecture uses a circuit for changing the mode of power consumption and a link state detector within a network chip which is controlled by the central processing unit. Accordingly, no independent control of the power consumption can be achieved. The use of the central processing unit for controlling a digital communication line interface (network chip) circuit and the power consumption thereof is very laborious.

From US 6,993,667 B1 an apparatus for automatic energy savings mode for ethernet transceivers and a method thereof is known. The corresponding device and method are based on the connection activity and therefore does not provide the function to save energy depending on the connection of a network cable. Accordingly, the method and apparatus are more complex.

### SUMMARY OF THE INVENTION

The invention is directed to a network control apparatus. A power voltage is transmitted to a network chip to enable the network chip property when a network cable is connected to the network control apparatus. When the network cable is not connected to the network control apparatus, the power voltage is not transmitted to the network chip. Thus, when the network is not used, the network chip does not consume the voltage so that the power-saving effect is achieved.

According to a first aspect of the present invention, a network control apparatus including a connector, a controller and a power switch is provided. When a network cable is connected to the convector, a detecting signal is outputted. When the controller receives the detecting signal, a network control signal is outputted to the power switch. When the power switch receives the network control signal, the power switch turns on to transmit a power voltage to a network chip to enable the network chirp.

According to a second aspect of the present invention, a method for enabling a network chip is provided. The method includes the following steps. First, it is detected whether a network cable is connected to a connector. Next, if the network cable is connected to the Connector, a detecting signal is outputted. Then, a controller outputs a network control signal according to the detecting signal. Finally, a power switch transmits a power voltage to the network chip according to the network control signal to enable the network chip.

The invention will become apparent from the following detailed description of the preferred but non-limiting embodiments. The following description is made with reference to the accompanying drawings.

### BRIEF DESCRIPTION OF THE DRAWINGS

FIG. 1 (Prior Art) is a block diagram showing a conventional network system.

FIG. 2 is a block diagram showing a network control apparatus.

FIG. 3 is a block diagram showing a network control apparatus according to an embodiment of the invention.

FIG. 4 is a flow chart showing a method for enabling a network chip in the network control apparatus of FIG. 3.

### DETAILED DESCRIPTION OF THE INVENTION

In the network control apparatus of the invention, when a network cable is connected to the network control apparatus, i.e. when the network control apparatus starts to operate, a power voltage is transmitted to a network chip to make the network chip operate properly. When the network cable is not connected to a connector, i.e. when the network is not used, the power voltage is not transmitted to the network chip. Thus, when the network is not used, the network chip does not consume the electric power so that the power-saving effect can be achieved.

FIG. 2 is a block diagram showing a network control apparatus 200. Referring to FIG. 2, the network control apparatus 200 includes a connector 202, a controller 203 and a power switch 204. The connector 202, for example, an RJ45 connector, is selectively connected to a network cable 201. The controller 203, for example, an embedded controller, receives a detecting signal Sd outputted from the connector 202. The power switch 204 is an N-type metal oxidation semiconductor transistor (NMOS) in this embodiment, or may be, for example, a P-type metal oxidation semiconductor transistor (PMOS). The power switch 204 is controlled by a network control signal Sc outputted from the controller 203. The power switch 204 has a drain coupled to a voltage source VDD and a source coupled to a network chip 205. When the power switch 204 receives the network control signal Sc, the power switch 204 turns on and outputs a power voltage Vp to the network chip 205 from its source.

When the network cable 201 is connected to the network control apparatus 200, the network control apparatus 200 starts to output the power voltage Vp to the network chip 205 to enable the network chip 205. The detailed operation of the network control apparatus 200 will be described in the following. When the network cable 201 is connected to the connector 202, the connector 202 outputs the detecting signal Sd to the controller 203 to notify the controller 203 that the network cable 201 has been connected.
The detecting signal Sd may change from a high level to a low level or from the low level to the high level. When the controller 203 receives the detecting signal Sd, the controller 203 outputs the network control signal Sc to the power switch 204. The network control signal Sc is for controlling the power switch 204. When the power switch 204 receives the network control signal Sc, the power switch 204 turns on and transmits the power voltage Vp to the network chip 205. After the network chip 205 receives the power voltage Vp, the network chip 205 starts to work properly.

A detecting pin of the connector 202 is provided to detect whether the network cable 201 has been connected. When the network cable 201 is connected to the connector 202, the network cable 201 touches the detecting pin so that the connector 202 outputs the detecting signal Sd.

When the network cable 201 is not connected to the connector 202, the power switch 204 electrically isolates the power voltage Vp from the network chip 205, and the network chip 205 cannot receive the power voltage Vp. Thus, when the network is not used, the network chip cannot consume the electric power so that the power-saving effect is achieved.

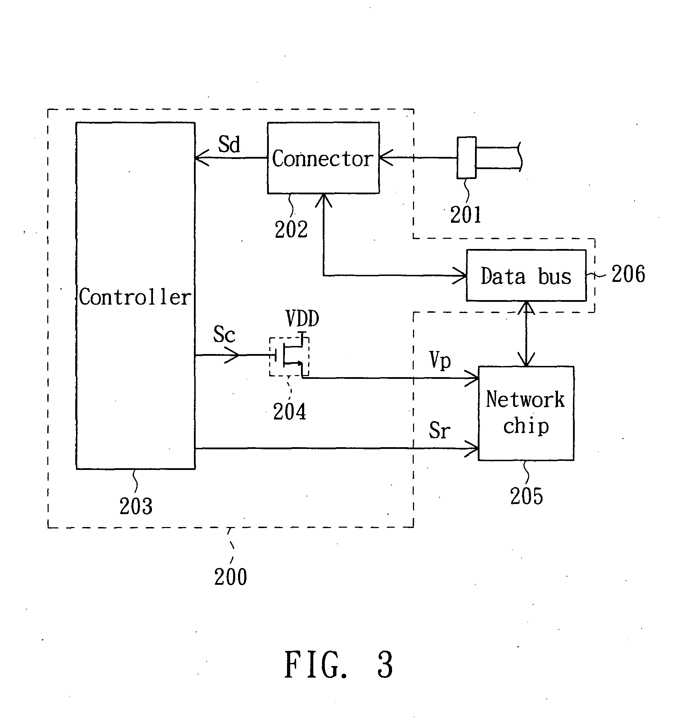

FIG. 3 is a block diagram showing a network control apparatus according to an embodiment of the invention. Referring to FIG. 3, what is different from the apparatus described in Fig. 2 is that the network control apparatus of this embodiment further includes a data bus 206, and the controller outputs a network control signal and further outputs a reset signal Sr for resetting the network chip 205. The operation of the network control apparatus according to the preferred embodiment of the invention will be described in the following. When the network cable 201 is connected to the connector 202, the connector 202 outputs the detecting signal Sd to the controller 203. After the controller 203 receives the detecting signal Sd, the network control signal Sc is outputted to the power switch 204, and then the power switch 204 outputs the power voltage Vp to the network chip 205.
After the controller 203 receives the detecting signal Sd, the controller 203 also outputs the reset signal Sr to reset the network chip 205.

In addition, network data may be transmitted from the outside to the network chip 205 through the data bus 206, or transmitted from the network chip 205 to the outside through the data bus 206.

The connector 202 according to the embodiment of the invention is the RJ45 connector having the detecting pin for detecting whether the network cable is connected. In practice, however, any connector capable of detecting whether the network cable is connected can be used without departing from the scope of the invention. In addition, the controller 203 according to the embodiment of the invention may also be another controller, such as a microprocessor or a south bridge chip. The power switch 204 is not limited to the NMOS switch proposed in the embodiment of the invention. Any other switch element, such as a PMOS or a bipolar interface transistor (BJT), may be used alternatively.

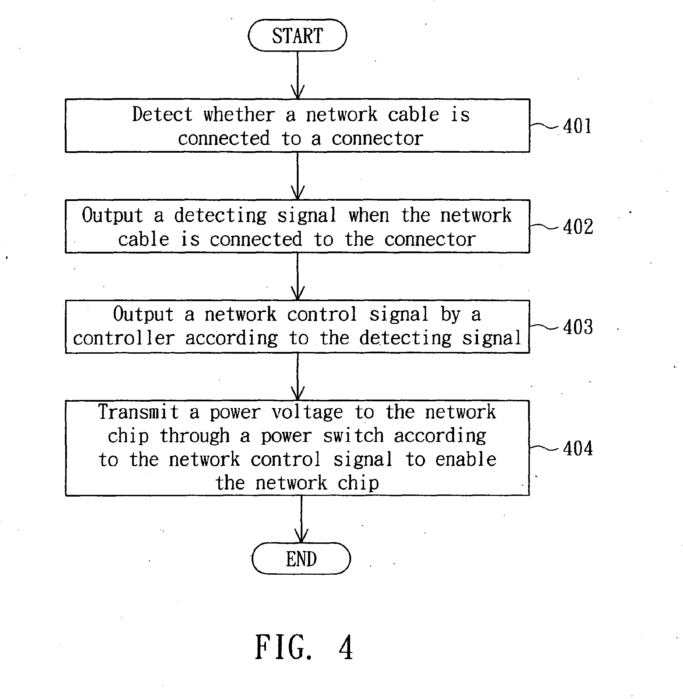

FIG. 4 is a flow chart showing a method for enabling a network chip in the network control apparatus of FIG. 3. In step 401, detect whether the network cable 201 is connected to the connector 202. Next, in step 402, output the detecting signal Sd when the network cable 201 is connected to the connector 202. In step 403, output the network control signal Sc according to the detecting signal Sd by the controller 203 to control the power switch 204. Finally, in step 404, transmit the power voltage Vp to the network chip 205 according to the network control signal Sc through the power switch 204 to enable the network chip 205. In addition, further output the reset signal Sr by the controller 203 to reset the network chip 205.

In the network control apparatus according to the invention, the power voltage is controlled whether to output to the network chip by detecting whether the network cable is connected to the connector. When the network cable is connected to the connector, the network chip starts to receive the power voltage and thus to work properly. When the network cable is not connected to the connector, i.e. the network is not used, the network chip cannot receive the power voltage and cannot consume the electric power. Thus, the network control apparatus of the invention can achieve the power-saving effect.

While the invention has been described by way of examples and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A network control apparatus, **characterized in that** the network control apparatus comprises:
a connector for outputting a detecting signal when a network cable is connected to the connector, wherein the connector further comprises at least one detecting pin, and when the network cable is connected to the connector, the network cable contacts the detecting pin to enable the connector to output the detecting signal;
a controller for receiving the detecting signal and thus outputting a network control signal;
a power switch, adapted to turn on when receiving the network control signal, and adapted to transmit a power voltage to a network chip to enable the network chip; and <
a data bus connected between the connector and the network chip for transmitting a network data to the network chip;
wherein the controller is adapted to output a reset signal to the network chip to reset the network chip when the network chip receives the power voltage.

2. The apparatus according to claim 1, **characterized in that** the connector is an RJ45 connector.

3. The apparatus according to claim 1, **characterized in that** the power switch is a P-type metal oxidation semiconductor transistor (PMOS) or an N-type metal oxidation semiconductor transistor (NMOS).

4. The apparatus according to claim 1, **characterized in that** the controller is a south bridge chip or embedded controller.

5. A method for enabling a network chip, the method **characterized in that** the method for enabling a network chip comprises the steps of:
detecting whether a network cable is connected to a connector, wherein the connector comprises at least one detecting pin, which is contacted by a network cable, when the network cable is connected to the connector;
outputting a detecting signal by the connector when the network cable is connected to the connector;
outputting a network control signal by a controller according to the detecting signal;
transmitting a power voltage to the network chip through a power switch according to the network control signal to enable the network chip;
outputting a reset signal to the network chip by the controller to reset the network chip when the network chip receives the power voltage; and
transmitting a network data to the network chip via a data bus connected between the connector and the network chip.

6. The method according to claim 5, **characterized in that** the detecting signal changes from a high level to a low level or changes from a low level to a high level.

## Patentansprüche

1. Netzwerksteuerungsvorrichtung, **dadurch gekennzeichnet, dass** die Netzwerksteuerungsvorrichtung umfasst:
einen Anschluss zur Ausgabe eines Erkennungssignals, wenn ein Netzwerkkabel mit dem Anschluss verbunden ist, wobei der Anschluss ferner wenigstens einen Erkennungsstift umfasst, und wenn das Netzwerkkabel mit dem Anschluss verbunden ist, das Netzwerkkabel den Erkennungsstift kontaktiert und es dem Anschluss ermöglicht ein Erkennungssignal auszugeben;
einen Kontroller zum Empfangen des Erkennungssignals und entsprechendes Ausgeben eines Netzwerksteuerungssignals;
einen Leistungsschalter, der geeignet ist anzuschalten, wenn das Netzwerksteuerungssignal empfangen wird, und der geeignet ist, eine Spannung an einen Netzwerkchip zu übermitteln, um den Netzwerkchip zu aktivieren; und
einen Datenbus, der zwischen dem Anschluss und dem Netzwerkchip verbunden ist, um Netzwerkdaten zum Netzwerkchip zu übermitteln;
wobei der Kontroller geeignet ist, ein Rücksetz-Signal an den Netzwerkchip auszugeben, um den Netzwerkchip zurückzusetzen, wenn der Netzwerkchip die Leistungsspannung empfängt.

2. Vorrichtung nach Anspruch 1, **dadurch gekennzeichnet, dass** der Anschluss ein RJ45 Anschluss ist.

3. Vorrichtung nach Anspruch 1, **dadurch gekennzeichnet, dass** der Leistungsschalter ein P-Typ Metall-Oxid Halbleiter Transistor (PMOS) oder ein N-Typ Metall-Oxid Halbleiter Transistor (NMOS) ist.

4. Vorrichtung nach Anspruch 1, **dadurch gekennzeichnet, dass** der Kontroller ein South-Bridge Chip oder ein Embedded Cotroller ist.

5. Verfahren zur Aktivierung eines Netzwerkchips, wobei das Verfahren **dadurch gekennzeichnet ist, dass** das Verfahren zur Aktivierung eines Netzwerkchips die Schritte umfasst:
Erkennen, ob ein Netzwerkkabel mit einem Anschluss verbunden ist, wobei der Anschluss wenigstens einen Erkennungsstift umfasst, der von einem Netzwerkkabel kontaktiert wird, wenn das Netzwerkkabel mit dem Anschluss verbunden ist;
Ausgeben eines Erkennungssignals durch den Anschluss, wenn das Netzwerkkabel mit dem Anschluss verbunden ist;
Ausgeben eines Netzwerksteuerungssignals durch den Kontroller gemäß dem Erkennungssignal;
Übertragen einer Leistungsspannung an einen Netzwerkchip durch einen Leistungsschalter gemäß dem Netzwerksteuerungssignal, um den Netzwerkchip zu aktivieren;
Ausgeben eines Rücksetz-Signals an den Netzwerkchip durch den Kontroller, um den Netzwerkchip zurückzusetzen, wenn der Netzwerkchip die Leistungsspannung empfängt; und
Übertragen von Netzwerkdaten an den Netzwerkchip über einen Datenbus, der zwischen dem Anschluss und dem Netzwerkchip verbunden ist.

6. Verfahren nach Anspruch 5, **dadurch gekennzeichnet, dass** sich das Erkennungssignal von einer hohen Stufe zu einer niedrigen Stufe verändert oder sich von einer niedrigen Stufe zu einer hohen Stufe verändert.

## Revendications

1. Dispositif de commande de réseau, **caractérisé en ce que** le dispositif de commande de réseau comprend :
un connecteur pour produire en sortie un signal de détection lorsqu'un câble de réseau est connecté au connecteur, le connecteur comprenant en outre au moins une broche de détection et, lorsque le câble de réseau est connecté au connecteur, le câble de réseau établissant un contact avec la broche de détection pour permettre au connecteur de produire en sortie le signal de détection ;
un contrôleur pour recevoir le signal de détection et donc produire en sortie un signal de commande de réseau ;
un interrupteur d'alimentation adapté pour s'enclencher à la réception du signal de commande de réseau et adapté pour transmettre une tension d'alimentation à une puce de réseau pour activer la puce de réseau ; et
un bus de données connecté entre le connecteur et la puce de réseau pour transmettre des données de réseau à la puce de réseau ;
dans lequel le contrôleur est adapté pour envoyer un signal de réinitialisation sur la puce de réseau pour réinitialiser la puce de réseau lorsque la puce de réseau reçoit la tension d'alimentation.

2. Dispositif selon la revendication 1, **caractérisé en ce que** le connecteur est un connecteur RJ45.

3. Dispositif selon la revendication 1, **caractérisé en ce que** l'interrupteur d'alimentation est un transistor métal / oxyde / semi-conducteur de type P (PMOS) ou un transistor métal / oxyde / semi-conducteur de type N (NMOS).

4. Dispositif selon la revendication 1, **caractérisé en ce que** le contrôleur est une puce southbridge ou un contrôleur intégré.

5. Procédé pour activer une puce de réseau, **caractérisé en ce que** le procédé pour activer une puce de réseau comprend les étapes suivantes :
détection de la connexion entre un câble de réseau et un connecteur, le connecteur comprenant au moins une broche de détection qui est raccordée à un câble de réseau lorsque le câble de réseau est connecté au connecteur ;
production en sortie d'un signal de détection par le connecteur lorsque le câble de réseau est connecté au connecteur ;
production en sortie d'un signal de commande de réseau par un contrôleur en fonction du signal de détection ;
transmission d'une tension d'alimentation à la puce de réseau via un interrupteur d'alimentation en fonction du signal de commande de réseau pour activer la puce de réseau ;
envoi, par le contrôleur, d'un signal de réinitialisation sur la puce de réseau pour réinitialiser la puce de réseau lorsque la puce de réseau reçoit la tension d'alimentation ; et
transmission de données de réseau à la puce de réseau via un bus de données connecté entre le connecteur et la puce de réseau.

6. Procédé selon la revendication 5, **caractérisé en ce que** le signal de détection passe d'un niveau haut à un niveau bas ou passe d'un niveau bas à un niveau haut.
